# DEMANDE DE BREVET EUROPEEN

(11) **EP 2 280 253 A1**
(43) Date de publication de la demande: **02.02.2011**
(21) Numéro de dépôt: 10170817.0
(22) Date de dépôt: 26.07.2010
(51) Int. Cl.: G01F 23/22, G01F 23/24

(54) **Dispositif d'indication d'un niveau de liquide chaud**

(30) Priorité: 27.07.2009 FR 0955246
(71) Demandeur: Atlantic Industrie, 85000 La Roche sur Yon (FR)
(72) Inventeur: Penisson, Pierre, 85430, NIEUL LE DOLENT (FR); Merlet, Christian, 85140, CHAUCHE (FR)
(74) Mandataire: Laget, Jean-Loup

(57) **Abrégé**

Un dispositif d'indication d'un niveau de liquide chaud dans une cuve de chauffe-eau, pour repérer la position de la zone intermédiaire (M) de stratification thermique appelée « miroir » comporte au moins un moyen (2a,2b,2,2d,6,8) à changement d'apparence, dont l'état varie en fonction de la température du liquide, sans apport d'énergie extérieure .

## Description

L'invention est relative à un dispositif d'indication de niveau de liquide chaud, notamment d'un niveau d'eau chaude dans une cuve de chauffe-eau électrique.
Le document DE 202006006743 U, décrit un dispositif d'indication pour un accumulateur de chaleur comportant des moyens d'indication pour représenter une température détectée. Ce dispositif donne satisfaction mais nécessite l'utilisation d'une source d'énergie, par exemple d'une batterie électrique.
D'autres dispositifs de type connu mettent en oeuvre un thermomètre à affichage disposé au milieu ou en partie haute d'une cuve de chauffe-eau. Le système à indication par thermomètre est peu précis, car il permet uniquement de déterminer si la zone intermédiaire de stratification thermique appelée couramment « miroir » par les hommes du métier se trouve au dessus ou au dessous du thermomètre indicateur.
D'autres dispositifs connus utilisent des sondes collées sur la cuve de chauffe-eau ou placées dans un tube ou un doigt de gant. Ces sondes de température transmettent des signaux à un système électronique qui traite le signal et produit une information d'affichage par liaison filaire ou par liaison sans fil. L'afficheur est généralement composé de diodes électroluminescentes qui ce colorent en rouge ou en bleu suivant la température, en indiquant ainsi la quantité d'eau chaude restante à un utilisateur.
Le document GB 370 118 concerne des moyens d'indication mécanique d'une température d'eau chaude sur un cadran, tels qu'une aiguille indiquant une température d'eau chaude sur un cadran.
Le document US 5 541 969 (MATTESON) concerne un indicateur avec des thermocouples à jonction chaude, aptes à produire un signal. Le signal produit par ces thermocouples à jonction chaude est transmis à un emplacement éloigné par une liaison filaire.

Un but de l'invention est de perfectionner l'état de la technique connue, en fournissant des indications de niveau de liquide chaud sans nécessiter une source d'énergie permanente, ni une source indépendante d'énergie, électrique, mécanique ou autre, par exemple une batterie électrique ou un ressort.

L'invention a pour objet un dispositif d'indication d'un niveau de liquide chaud dans une cuve de chauffe-eau, pour repérer la position de la zone intermédiaire de stratification thermique appelée « miroir », caractérisée par le fait que le dispositif comporte au moins un moyen à changement d'apparence, dont l'état varie en fonction de la température du liquide, sans apport d'énergie extérieure, en utilisant uniquement l'énergie correspondant à la température du liquide chaud ou de la cuve contenant le liquide chaud.

Selon d'autres caractéristiques de l'invention :
- Le dispositif peut comporter plusieurs moyens à changement d'apparence.
- Chaque moyen à changement d'apparence est en liaison thermique avec une cuve contenant le liquide chaud, notamment avec une cuve de chauffe-eau.
- Pour l'indication d'un niveau d'eau chaude dans une cuve d'eau chaude thermiquement isolée, le dispositif comporte un moyen de transmission de chaleur entre la cuve d'eau chaude et la paroi externe du revêtement isolant destinée à recevoir le moyen à changement d'apparence.
- Un moyen à changement d'apparence peut comporter un module thermoélectrique.
- Un moyen à changement d'apparence peut comporter un module à effet Seebeck.
- Un moyen à changement d'apparence peut comporter au moins un indicateur lumineux.
- Un indicateur lumineux peut comporter au moins une diode électroluminescente.
- Un moyen à changement d'apparence peut comporter au moins un motif en peinture électrochromique

L'invention sera mieux comprise grâce à la description qui va suivre donnée à titre d'exemple non limitatif en référence aux dessins annexés dans lesquels :
La figure 1 représente schématiquement une vue partielle en coupe diamétrale d'un chauffe-eau équipé d'un dispositif selon l'invention.
La figure 2 représente schématiquement une vue partielle agrandie d'un dispositif selon l'invention monté à travers une épaisseur d'isolant thermique d'une cuve de chauffe-eau.
La figure 3 représente schématiquement un autre dispositif selon l'invention destiné à être monté au contact d'une cuve de liquide chaud.

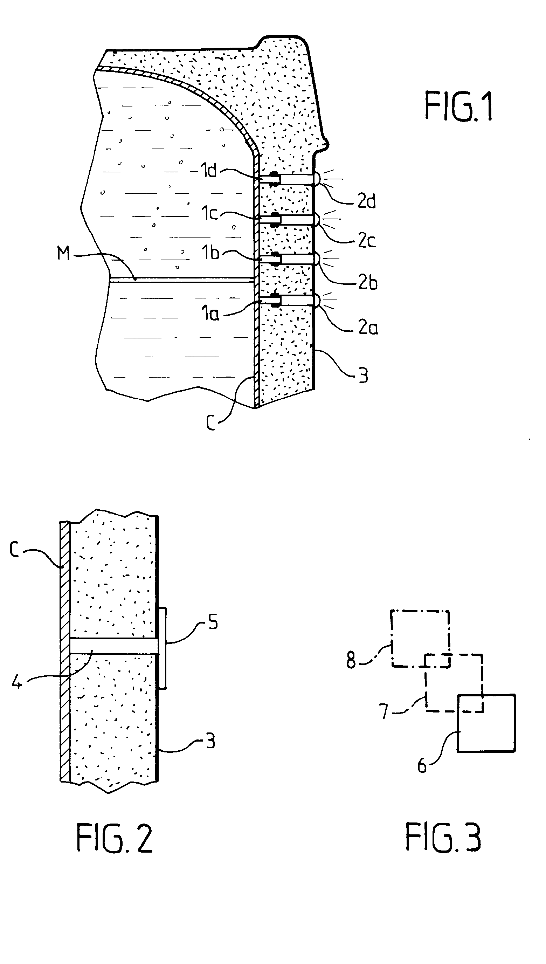

Sur la figure 1, un premier mode de réalisation de dispositif selon l'invention comporte des modules thermoélectriques disposés au contact de la cuve du chauffe-eau et insérés dans un doigt de gant portant à son extrémité distale une diode électroluminescente. Une zone M intermédiaire de stratification thermique appelée « miroir » par l'homme du métier sépare la partie supérieure de la cuve remplie de liquide chaud de la partie inférieure de la cuve remplie de liquide froid.

La cuve C réalisée en un matériau thermiquement conducteur, par exemple en acier émaillé est au contact des modules 1a, 1b, 1c thermoélectriques.

Le module thermoélectrique 1a inférieur est situé dans la partie froide de la cuve, tandis que les modules 1b, 1c, 1d sont situés au dessus du miroir M et dans la partie chaude de la cuve.

Les modules thermoélectriques 1a, 1b, 1c, 1d engendrent une quantité d'énergie électrique dépendant de la température qu'ils détectent et fournissent un signal électrique permettant d'allumer respectivement une diode électroluminescente 2a, 2b, 2c ou 2d. Un traitement de signal permet d'émettre une couleur différente ou de projeter une apparence différente sur la surface externe du revêtement isolant de la cuve C.

Le revêtement isolant de la cuve C est généralement constitué en mousse de polyuréthanne protégée par une fine coque extérieure 3.

La fine coque extérieure 3 est percée à l'endroit correspondant aux émissions lumineuses ou au changement d'apparence des diodes électroluminescentes 2a, 2b, 2c, 2d.

De préférence, chaque module thermoélectrique 1a, 1b, 1e, 1d est un module à effet Seebeck.

De préférence également, chaque diode électroluminescente 2a, 2b, 2c, 2d est une diode électroluminescente multicolore pouvant être commandée en fonction de la température pour émettre une couleur spécifique parmi plusieurs couleurs différentes.

Ainsi, dans le cas de la figure 1, la diode électroluminescente 2a située en partie froide peut émettre dans le vert, la diode électroluminescente 2b située au niveau du miroir M peut émettre dans l'orange, tandis que les diodes supérieures 2c et 2d peuvent émettre dans le rouge pour indiquer la présence de liquide chaud en partie supérieure.

Dans le cas d'un chauffe-eau, notamment d'un chauffe-eau électrique à accumulation, la température correspondante à l'émission du rouge est voisine de 65°C, la température correspondante à l'émission orange est voisine de 40°C, tandis que la température correspondante à l'émission verte est voisine de 20°C.

Sur la figure 2, un autre dispositif suivant l'invention comporte un moyen 4 de transmission de chaleur fixé d'une part à la cuve C du chauffe-eau et d'autre part à une plaquette 5 de diodes électroluminescentes changeant d'apparence en fonction de la température de la cuve C du chauffe-eau.

La plaquette 5 de diodes électroluminescentes peut être une plaquette multicolore ou composite, en contact avec plusieurs moyens 4 de transmission de chaleur s'étendant dans le sens de la hauteur, dont la surface se colore progressivement selon le niveau ou selon la quantité de liquide chaud restant dans la cuve C.

Un moyen 4 de transmission de chaleur peut être un caloduc, ou une simple tige en métal bon conducteur thermique, par exemple en cuivre.

Des modules thermoélectriques non représentés peuvent être identiques ou équivalents à ceux décrits en référence à la figure 1, et sont aptes à engendrer une quantité d'énergie électrique dépendant de la température qu'ils détectent et à fournir un signal électrique permettant d'allumer progressivement une surface colorée par des diodes électroluminescentes.

Sur la figure 3, un troisième mode de réalisation de dispositif selon l'invention comporte des motifs en peinture électrochromique.

Le motif 6 correspond par exemple à une température froide, tandis que le motif 7 correspond à une température moyenne et le motif 8 à une température chaude.

Des modules thermoélectriques non représentés peuvent être identiques ou équivalents à ceux décrits en référence à la figure 1, et sont aptes à engendrer une quantité d'énergie électrique dépendant de la température qu'ils détectent et à fournir un signal électrique permettant d'allumer des motifs en peinture électrochromique.

Les motifs en peinture électrochromique 6, 7, 8 peuvent être apposés directement sur une cuve de liquide chaud ou un réservoir de chauffe-eau et on peut prévoir une découpe de l'isolation ou une fenêtre transparente permettant d'observer les motifs directement apposés sur la cuve du chauffe-eau.

Cette disposition de trois motifs électrochromiques 6, 7, 8 peut être répétée à divers emplacements de la cuve, moyennant éventuellement un décalage hélicoïdal, de manière à répartir régulièrement les ponts thermiques résultant des vides correspondant aux fenêtres de visualisation.
L'invention décrite en référence à plusieurs modes de réalisation n'y est nullement limitée, et couvre au contraire toute modification de forme et toute variante de réalisation dans le cadre et l'esprit de l'invention.
L'essentiel est de permettre une indication de température sans apport d'énergie extérieure, en utilisant uniquement l'énergie correspondant à la température du liquide chaud ou de la cuve contenant le liquide chaud.

## Revendications

1. Dispositif d'indication d'un niveau de liquide chaud dans une cuve de chauffe-eau, pour repérer la position de la zone intermédiaire (M) de stratification thermique appelée « miroir », **caractérisée par le fait que** le dispositif comporte au moins un moyen (2a,2b,2c,2d,6,8) à changement d'apparence, dont l'état varie en fonction de la température du liquide, sans apport d'énergie extérieure, en utilisant uniquement l'énergie correspondant à la température du liquide chaud ou de la cuve contenant le liquide chaud.

2. Dispositif selon la revendication 1, **caractérisé par le fait que** le dispositif comporte plusieurs moyens (2a, 2d, 6-8) à changement d'apparence.

3. Dispositif selon la revendication 1 ou la revendication 2, **caractérisé par le fait que** chaque moyen (2a, 2b, 2c, 2d, 5, 6, 7, 8) à changement d'apparence est en liaison thermique avec une cuve (C) contenant le liquide chaud, notamment avec une cuve (C) de chauffe-eau.

4. Dispositif selon l'une quelconque des revendications 1 à 3, pour l'indication d'un niveau d'eau chaude dans une cuve d'eau chaude thermiquement isolée, comportant un moyen (4) de transmission de chaleur entre la cuve (C) d'eau chaude et la paroi externe (3) du revêtement isolant destinée à recevoir le moyen (5) à changement d'apparence.

5. Dispositif selon la revendication 1, **caractérisé par le fait qu'**un moyen à changement d'apparence comporte un module thermoélectrique (1a, 1b, 1c, 1d).

6. Dispositif selon la revendication 5, **caractérisé par le fait qu'**un moyen à changement d'apparence comporte un module à effet Seebeck (1a, 1b, 1c, 1d).

7. Dispositif selon la revendication 5 ou la revendication 6, **caractérisé par le fait qu'**un moyen à changement d'apparence (2a, 2b, 2c, 2d) comporte au moins un indicateur lumineux.

8. Dispositif selon la revendication 8, **caractérisé par le fait qu'**un indicateur lumineux comporte au moins une diode électroluminescente (2a, 2b, 2c, 2d).

9. Dispositif selon la revendication 1, **caractérisé par le fait qu'**un moyen à changement d'apparence comporte au moins un motif en peinture électrochromique (6-8).
